# EUROPEAN PATENT APPLICATION

(11) **EP 2 019 520 A1**
(43) Date of publication of application: **28.01.2009**
(21) Application number: 07014619.6
(22) Date of filing: 25.07.2007
(51) Int. Cl.: H04L 12/56

(54) **Method of determining network elements for synchronous data transmission, control element, control system and computer program product**

(71) Applicant: Nokia Siemens Networks Oy, 02610 Espoo (FI)
(72) Inventor: Frantz, Michael, 81737 München (DE); Günther, Wolfgang, 81479 München (DE)
(74) Representative: Bruglachner, Thomas E.

(57) **Abstract**

A method is described, comprising:
- providing a first network (20) that comprises a first network element (12),
- considering the network topology of the first network (20) for determining at least two network elements (NE1, NE2) of the first network,
- creating simultaneous connections between the first network element (12) and the determined network elements (NE1, NE2).

## Description

The invention is in the field of data transmission. More specifically the invention pertains to a method of determining network elements for synchronous or parallel data transmission. The network elements are, for instance, part of a control or management network, which controls network elements of a transport network. The network elements of the transport network may, for instance, perform switching functions or routing functions. The switching functions or routing functions may be controlled by a first network element of the first network using maintenance messages.

What is needed is a method that allows a very fast synchronization of data in the first network, especially if the first network has many network elements, for instance more than 1000 network elements.

It is an object of the present invention to provide a method of determining network elements for synchronous or parallel data transmission. Furthermore, a control element, a control system and a computer program product shall be provided that may be used to carry out the method.

This object is solved by the method of claim 1. Embodiments are given in the sub claims.

A method of determining network elements for synchronous data transmission is given, comprising:
- providing a first network that comprises a first network element (TMN system),
- considering the network topology of the first network for determining or for selecting at least two network elements of the first network, and
- creating simultaneous connections between the first network element and the determined network elements.

This method is advantageous compared with a method where simultaneous transmission of data is performed without considering the topology. By considering the topology it is possible to detect links with comparable small transmission rates over which huge amounts of data have to be transmitted, i.e. bottle necks for data transmission. Such links shall be used steadily during the transmission because they determine the total duration of the transmission of data. Furthermore, such links shall not be overbooked or alternatively they shall be overbooked only in a predefined manner as described below.

Considering the topology allows the implementation of rules for the selection of network elements for parallel transmission. Examples of these rules are described in more detail below. Some rules also work if only a part of the overall network topology is taken into consideration.

The topology refers to the structure of the network. The topology data allows a program or a user to determine the adjacent network elements for each network element in the network. Furthermore, the topology data allows a program or a user to determine whether there is a link between two network elements.

A connection may be established only at a higher protocol layer or in more than one protocol layer. It is also possible that there is an actual physical connection, for instance a connection line.

The first network may be used to manage or to control a second network. The second network may transmit user data, for instance:
- speech data, especially telephone data,
- program data,
- text data, especially hyper text data,
- E-mail data,
- picture data, for instance video data or digital photography data, and
- SMS (Short Message Service) data or MMS (Multimedia Message Service) data.

These user data are different from control data that is used in the first network to control the second network. The control data may describe, for instance:
- hardware of switching elements, for instance subscriber cards, like xDSL cards (x Digital Subscriber Line, where x may be a specific letter that describes the kind of DSL) in a rack,
- connections or links between network elements,
- logical data, e.g., cross connections, VLAN configurations, quality of service configurations.

The determining may comprise:
- selecting network elements that are reachable via completely different routes from the first network element or that can reach the first network element via completely different routes.

Such completely different routes may have no links in common. This means that the routes are located in different parts of the first network, for instance in different sub trees beginning with the first network element. The determining may be performed especially without considering transmission times.

This strategy of selecting network elements is very simple but allows the implementation of rules for parallel data transmission in an efficient way. It is possible, for instance, to implement rules like:
- uniform distribution of transmission processes in the first network, and/or,
- processing of network elements in higher levels of a hierarchy before network elements in lower levels of the hierarchy.

If there are different results for different rules, it is possible to consider priority values for these rules. These priority values may, of course, be adapted during a transmission cycle for the first network.

The method may comprise:
- systematical overbooking of a link via which at least two network elements are reachable from the first network element or via which the at least two network elements can reach the first network element.

Such systematical overbooking is contrary to a random overbooking that may take place if the topology is not considered. The overbooking is implemented by selecting from a group of network elements that are reachable from the first network element or that can reach the first network element via the same link. Overbooking is possible by knowing only some parts of the total topology.

The moderate overbooking results in shorter estimated duration of transmission for predetermined amounts of data to or from at least one or all of the selected network elements compared with the case of serial synchronization of network elements. The actual durations of transmission may not be longer or may be considerably shorter than the estimated total transmission time because there may be transmission breaks or transmission delays for one network element that can now be used for another network element.

For example, if data of two 1 Mbit/s (Megabit per second) links are transmitted over a link with a transmission rate of 100 Mbit/s, there is no overbooking because the durations of data transmission will not be significantly longer compared with separate transmissions. Contrary, if data of two 1 Mbit/s links are transmitted via a link with a transmission rate of only 1 Mbit/s there is an overbooking.

The method using overbooking may comprise:
- considering transmission rates of the links for the selection.

Overbooking may be carried out without consideration of the duration of transmission for predetermined amounts of data. The consideration of the transmission rates alone already allows a program to determine a threshold to indicate if there is already an overbooking on a link or not.

The method using overbooking may be implemented in such a way that further overbooking of the same link is prevented after the first overbooking. This rule takes advantage of overbooking - for instance transmission breaks and transmission delays in one transmission may be used for the transmission of other data at the same link - but the rule also ensures that a bottle neck for transmission is not created.

Overbooking is also a simple strategy that is simple to implement. During the overbooking it is possible to consider more general rules, for instance:
- uniform distribution of transmission processes in the first network, and/or,
- processing of network elements in higher levels of hierarchy before network elements in lower levels of hierarchy,
- or combinations of these rules.

Thus, the systematical overbooking may result in a shorter overall transmission time for the whole first network.

The method may comprise:
- calculating durations for the transmission of predetermined amounts of data for at least two network elements in different parts of the first network, especially in different sub trees with each of these sub trees beginning at the first network element,
- selecting an element of a part for which the shortest duration was calculated.

This strategy supposes that it is better to start a new transmission in a part of the first network that has a shorter calculated transmission time compared with another part. In other words, the long transmission time in a first part is used to complete transmissions in a second part without the risk of making the transmission in the first part even longer by an additional further transmission in the first part.

The method may alternatively comprise:
- using the topology to select network elements for simultaneous connections or to determine a sequence for simultaneous connections with the help of a method of optimization.

Examples of methods of optimization are:
- method of steepest descent,
- method of least squares, and/or
- nonlinear optimization, for instance, neural networks or fuzzy methods.

The strategy for selecting network elements using methods of optimization may result in more computation. It may, however, be possible to further reduce the overall duration of data transmission in the first network. This may be a reason to accept the higher calculation burden of sophisticated methods of optimization.

The optimization can be done in advance for the whole first network. This may be contrary to the strategies mentioned above that may be performed during the transmission of data in a stepwise manner depending on the current characteristics of the first network. Alternatively, optimization methods may also be used to update the sequence during one cycle of uploading or downloading.

The method may comprise:
- storing data that describes the topology of the first network,
- using this data for the determining.

The data to describe the topology may be stored in a memory using, for instance, a table format, concatenated lists, a data base, etc. The first network may have a different topology compared with the second network. This may be true for parts of the first network or for the whole first network. It is possible to use parts of the second network for the first network in many ways, for instance by DCCM (Data Communication Channel Multiplex Section) or DCCR (Data Communication Channel Regenerator Section) as explained in more detail below.

Alternatively, it is possible that both networks have the same topology. In this case it is possible to use data for describing the topology of the second network for the method of determining the network elements for parallel data transmission. It may be possible that the second network already has data describing the topology, for instance in routing tables or in forwarding tables.

It is, likewise, possible to use data describing the topology of the first network to determine the network elements for parallel data transmission if that data is already used in the first network for other purposes, for instance for data forwarding, i.e. for switching or routing.

Topology data is implicitly comprised, for instance:
- in routing tables, especially in routing tables created with (O)SPF ((Open) Shortest Path First) algorithm as used for instance for the IP layer, or
- in forwarding tables, created, for instance, by using an STP (Spanning Tree Protocol) method, for instance in a switching layer. An example is the Ethernet protocol.

The method may also comprise:
- storing values that give the amount of data that has to be transmitted for network elements of the first network.

These values may be stored for all network elements. Furthermore, these values may be stored automatically or manually by user input. It is possible to use these values to calculate the estimated transmission times that are used in the strategies mentioned above.

The method may comprise:
- recalculating the network elements for synchronous transmission and/or the sequence for transmission after a transmission or synchronization of one network element has finished.

The recalculation is done before the transmission of data to or from the next network element and preferably within one cycle of uploading or downloading of the first network. By using steadily recalculation it is possible to consider the actual and current duration of transmission without significant delays. Changes that take place after starting the data transmission cycle for the first network may also be considered.

The method may automatically detect the topology from the transmitted data of the first network, for instance with the help of routing or forwarding tables or by using data fields that describe the structure of the network. Such data fields may describe a containment tree or a naming tree.

It is, of course, possible to use manual input to describe the topology of the first network.

The method may comprise:
- distributing processes that work in parallel in a uniform manner with regard to different parts of the first network.

This strategy was also mentioned above in combination with other strategies. This strategy effects the symmetrical data transmission in the first network and results in shorter overall duration of a transmission cycle. It is supposed that this strategy has the effect that transmission of data to or from all parts of the first network end approximately at the same time for many types of topologies. This means that the total duration of a cycle is as short as possible.

The method may comprise:
- selecting of network elements of a higher level in topology before selecting network elements in a lower level.

Here a higher level means for instance that a network element is nearer to the root of the topology tree if compared with another network element. The distance may, for instance, be measured in the number of links to the root from a network element.

This strategy secures a uniform processing of the network elements of the first network and works for many topologies. The result is again a shorter duration of one transmission cycle of the first network.

Combinations of the "uniform distribution strategy" and of the "higher levels first strategy" are possible as well.

The method may comprise an uploading of data from network elements of the first network to the first network element. A huge amount of data is typically involved in this kind of uploading. The huge amount of data may result in a very long overall duration of data transmission if the invention is not used.

The network elements of the first network may be control computers that control switching elements or routing elements of the second network. The switching elements may be, for instance, exchanges for circuit switched telephony or cross connectors for ATM (Asynchronous Transfer Mode) data transmission. Examples of routing elements are routers for IP networks.

The invention relates further to a control element, comprising:
- at least one processor,
- at least one memory,
wherein the memory stores program data for executing the following method:
- considering the network topology of a first network for determining at least two network elements of the first network,
- creating simultaneous connections between the first network element and the determined network elements.

The memory may store data describing the topology of the first network. Alternatively, a distributed system may be used wherein the data describing the topology is stored in another network element.

The control element may be used to perform the inventive method or to perform embodiments of the invention as mentioned above.

Furthermore, the invention relates to a control network, comprising at least one of such control elements.

The invention also relates to a computer program product comprising at least one computer readable storage medium having computer readable program code stored therein, the computer readable program code comprising:
a first executable portion for:
   - considering the network topology of a first network for determining at least two network elements of the first network,
   - creating simultaneous connections between the first network element and the determined network elements.

The computer program product may be for instance a compact disk, a floppy disk, a hard disk, a memory stick etc. The computer program product may, for instance, be used to distribute the program for performing the method of the invention via the internet. Furthermore, the computer program product may relate to an embodiment of the method of the invention.

Therefore, the technical effects stated above are also valid for the control element, the control system and for the computer program product.

In the following, embodiments of the invention are described with reference to the Figures, wherein:
- Figure 1: illustrates the topology of a transport network,
- Figure 2: illustrates a control network (DCN network),
- Figure 3: illustrates the view of a TMN system without considering the topology of the control network,
- Figure 4: illustrates the distribution of processes for uploading if there are more processes than sub trees,
- Figure 5: illustrates overbooking of links, and
- Figure 6: illustrates the selection of network elements based on calculated durations for data transmission.

The embodiments are only for illustrative purposes and do not restrict the scope of the invention. The same reference signs refer to the same technical features if not stated otherwise. As far as "may" is used in this application, it means the possibility of doing so as well as the actual technical implementation.

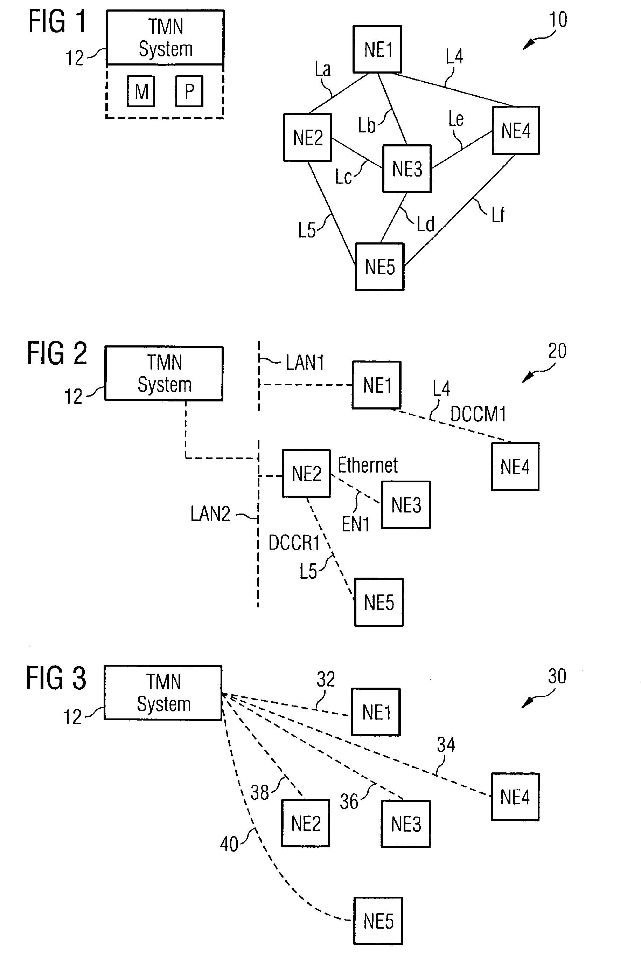

Figure 1 illustrates the topology of a transport network 10. The transport network 10 comprises, for instance, five network elements NE1 to NE5. The network 10 may be an IP (Internet Protocol) network, an ATM network etc. The transport network 10 transports mainly user data, for instance speech data or other data.

The network elements NE1 to NE5, may be switches, cross connects or routers. In the example there are the following links between the network elements:
- link La between network elements NE1 and NE2,
- link Lb between network elements NE1 and NE3,
- link Lc between network elements NE2 and NE3,
- link Ld between network elements NE3 and NE5,
- link Le between network elements NE3 and NE4,
- link Lf between network elements NE4 and NE5,
- link L4 between network elements NE1 and NE4, and
- link L5 between network elements NE2 and NE5.

The transport network 10 is managed from a TMN (Telecommunication Management Network) system 12. The system 12 comprises a computer with a memory M and a processor P. The memory M stores executable program data. If the processor P executes instructions of the program, uploading is performed as described in the following. Alternatively, an electronic hardware can be used without software.

The TMN system may work according to a proprietary standard or to an international standard for TMN systems, for instance, according to:
- ITU-T (International Telecommunication Union - Telecommunications Standardization Sector), M.3000, M.3100, X.700 to X.734, especially X.710,
- IETF (Internet Engineering Task Force), SNMP (Simple Network Management Protocol), as specified in several RFC's (Request For Comment), see for instance, RFC 1155 to 1157 (SNMP version 1), 1441 to 1447, 1901 to 1908 (SNMP version 2), 3410 to 3418 (version 3).
- COBRA (Common Object Request Broker Architecture) interface or more general XML interfaces.

Additionally, the TMN system considers the topology of a control network 20.

Figure 2 shows this control network 20 or DCN (Data Communication Network) network. The control network 20 comprises some parts of the transport network 10, namely:
- control elements in the network elements NE1 to NE5,
- a channel DCCM1 (Data Communication Channel Multiplex Section) of link L4,
- a channel DCCR1 (Data Communication Channel Regenerator Section) of link L5.

Additionally, the transport network 20 comprises:
- an Ethernet link EN1 between network elements NE2 and NE3,
- a local area network LAN1 between the TMN system 12 and network element NE1, and
- a local area network LAN2 between the TMN system 12 and the network element NE2.

Figure 3 illustrates the view 30 of the TMN system 12 without considering the topology of the control network. As shown in Figure 3 the TMN system only knows the network elements NE1 to NE5 and that it can make connections to these network elements, for instance:
- connection 32 to network element NE1,
- connection 34 to network element NE4,
- connection 36 to network element NE3,
- connection 38 to network element NE2, and
- connection 40 to network element NE5.

In the case shown in Figure 3, the uploading of data can take a considerable long time because the sequence of uploading is and therefore the network elements for parallel uploading are selected in the TMN system without knowing the topology of the control network 20.

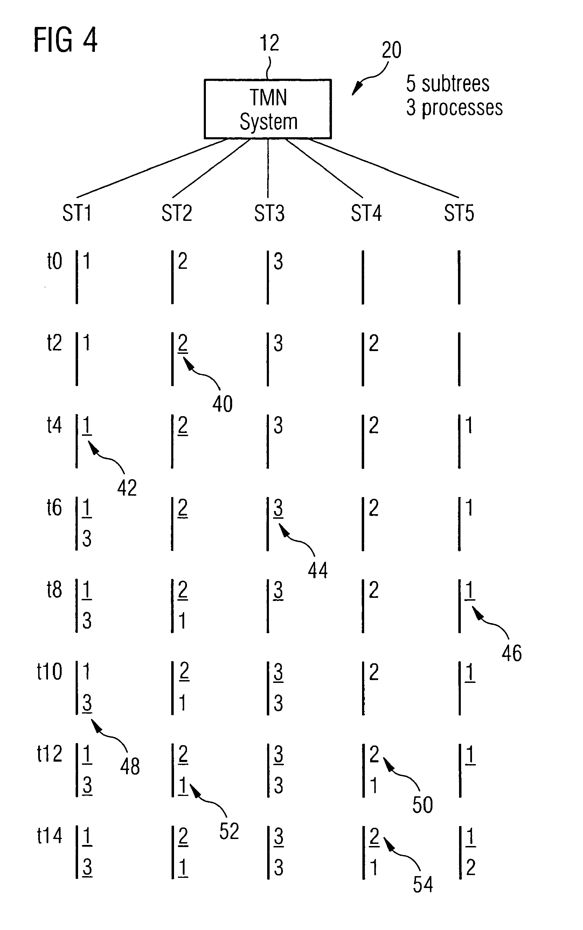

Figure 4 illustrates the distribution of processes for uploading if there are more processes than sub trees. In the example, it is supposed that the TMN system 12 knows the topology of the control network 10. Alternatively, the TMN system may know only that there are five sub trees ST1 to ST5 beginning at the TMN system 12. Furthermore, the TMN system knows which network elements NE1 to NE5 are comprised in which sub tree ST1 to ST5. In the example, there are five sub trees ST1 to ST5 but only three processes for parallel uploading in the TMN system 12. That means that at the beginning the number of sub trees is greater than the number of processes.

At time t0 processes 1 to 3 are, for instance, distributed to the following sub trees:
- process 1 to a network element in sub tree ST1,
- process 2 to a network element in sub tree ST2, and
- process 3 to a network element in sub tree ST3.

It is supposed that after time t0 at time t2 process 2 terminates which is marked by underlining the process number in Figure 4, see reference sign 40. At time t2 the second process is assigned to a network element in the forth sub tree ST4.

At time t4 process 1 ends, see reference sign 42. Process 1 is assigned to a network element in sub tree ST5. Data is uploaded by process 1 from this network element now.

At time t6 process 3 ends as indicated by reference sign 44. All sub trees ST1 to ST5 have now one network element that has uploaded or is uploading its data to the TMN system 12. Therefore the distribution of processes to the sub trees ST1 to ST5 starts with sub tree ST1 again. The free process 3 is used to upload a further network element in sub tree ST1.

At time t8 process 1 ends again and is assigned to a network element in sub tree ST2, see reference sign 46. At time t10 process 3 ends, indicated by reference sign 48, and is assigned to sub tree ST3.

At time t12 process 2 is still occupied, see reference sign 50, because there is a small transmission rate and/or a great amount of data to upload for the respective network element. At time t12 process 1 ends, indicated by reference sign 52, and is assigned to a network element in sub tree ST4. Process 2 ends at time t14, see reference sign 54, and is assigned to a network element of sub tree ST5.

As can be seen in Figure 4, the starting of processes is distributed to the sub trees ST1 to ST5 in a uniform manner. This may result in a short duration for uploading all network elements of the control network in most configurations of topology.

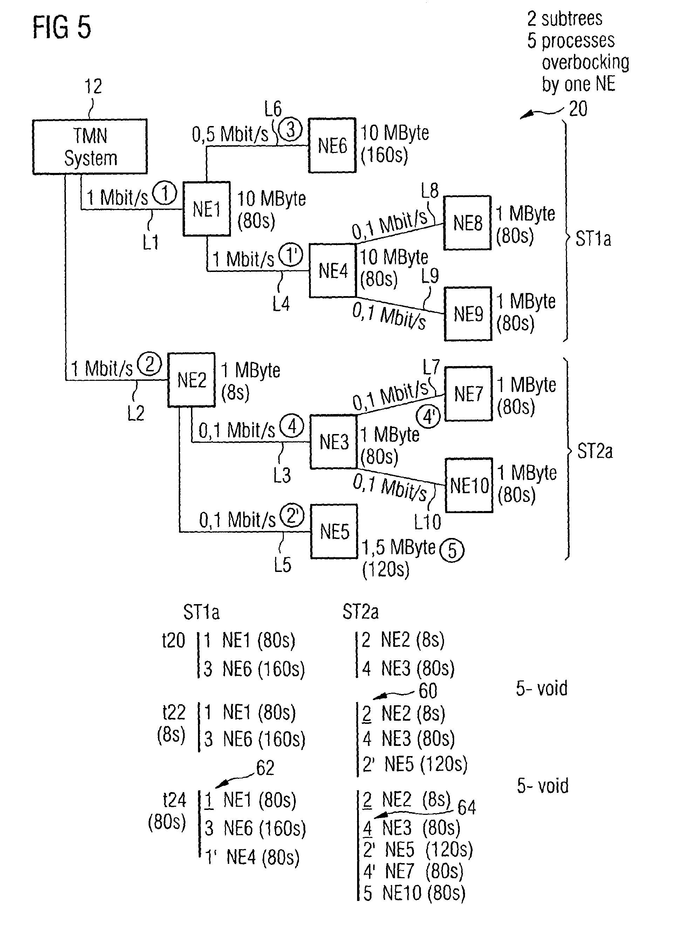

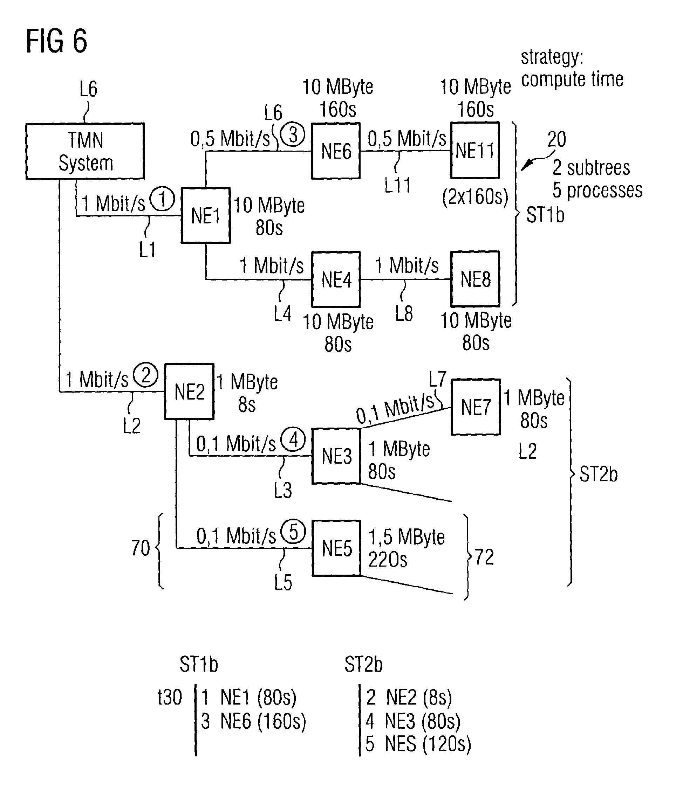

The number of processes becomes greater than the number of sub trees if three of the five sub trees are proceeded completely. Thus, these processes may be distributed to the remaining sub trees as described below with regard to Figure 5 or Figure 6. Alternatively, other distribution strategies are possible, for instance processing in the alphabetic order of names or by values of identifying numbers for the remaining network elements or even by random selection.

Figure 5 illustrates overbooking of links. It is assumed that there are more processes available in the TMN system 12 compared with the number of sub trees in control network 20. For reasons of simplifying it is assumed that the control network 20 only has two sub trees ST1a and ST2a now. It is assumed that there are 5 processes.

Sub tree ST1a comprises network elements NE1, NE4, NE6, NE8 and NE9. Sub tree ST2a comprises network elements NE2, NE3, NE5, NE7 and NE10. Furthermore, there are the following links in the control network 20 in addition to the links L1 to L5 described above with regard to Figure 2:
- link L6 between network element NE1 and NE6,
- link L8 between network element NE4 and NE8,
- link L9 between network element NE4 and NE9,
- link L7 between network element NE3 and NE7,
- link L10 between network element NE3 and NE10.

The links L1 to L10 have the following transmission rates:
- link L1 1 Mbit/s,
- link L2 1 Mbit/s,
- link L3 0.1 Mbit/s,
- link L4 1 Mbit/s,
- link L5 0.1 Mbit/s,
- link L6 0.5 Mbit/s, and
- link L7 to L10 each 0.1 Mbit/s (Megabit per second).

It is assumed that there are the following amounts of data for uploading from the respective network elements:
- network element NE1 10 MByte (80 s (seconds)),
- network element NE2 1 MByte (8 s),
- network element NE3 1 MByte (80 s),
- network element NE4 10 MByte (80 s),
- network element NE5 1.5 MByte (120 s),
- network element NE6 10 MByte (160 s), and
- network element NE7 to NE10 each 1 MByte (80 s).

The estimated durations of uploading are given in brackets because these durations are not calculated in the example of Figure 5 but they make it easier to describe Figure 5 better. The duration was calculated by multiplying the amount of data by factor 8 and dividing it by the transmission rates.

At time t20:
- the first process 1 is assigned to network element NE1,
- the second process 2 is assigned to network element NE2,
- the third process 3 is assigned to network element NE6, and
- the forth process 4 is assigned to network element NE3.

Process 5 is void because it is not assigned to a network element. While assigning network elements it is taken care that network elements of higher levels of hierarchy are assigned before network elements of lower levels. But this is optional. In the example network elements NE1 and NE2 of the first level are assigned to processes before network elements NE3 to NE6 of the second level are processed. Likewise, the network elements NE3 to NE6 of the second level will be processed before network elements NE7 to NE10 of the third level and so on.

But the main criterion for assigning processes is ^the overbooking of links by exactly one network element. Link 1 is for instance used by network element NE1 for uploading during process 1. This means that network element NE1 is estimated to need the whole transmission capacity of link L1. Nevertheless, process 3 is also started simultaneously and leads to an overbooking of link L1 by one network element. Therefore, no further overbooking is done for link L1.

The same overbooking is used with regard to link L2 and network elements NE2 and NE3. At time t20 it is not possible to start process 5 because this would violate the principle of overbooking only by at most one network element.

At time t22, i.e. eight seconds after the beginning of the cycle at time t20, process 2 ends, see reference sign 60. Process 2 is now named process 2' and is assigned to network element NE5, i.e. process 2' remains in sub tree ST2a, to have an approximately uniform distribution of processes to sub trees ST1a and ST2a. Process 5 remains still void because further overbooking by one element is not possible in sub tree ST1a or sub tree ST2a without violating the rule that higher levels are to be processed before starting with lower levels.

At time t24, process 1 finishes 80 seconds after time t20, see reference sign 62. Furthermore, process 4 also ends at time t24, see reference sign 64. Process 1 is now named process 1' and is assigned to network element NE4. This means that link L1 is again overbooked by one network element with the processes 3 and 1'. Therefore, no more overbooking is done in sub tree ST1a. Especially, there is no overbooking for link L4 because this would result in a double overbooking of link L1. Double overbooking would result in an undue longer transmission time on link L1 because reaction times and transmission breaks or delays are to short for further data transmissions.

At time t24, process 4 is started for network element NE7 in sub tree ST2a and is named process 4' now. Processes 2' and 4' neither result in the overbooking of link L2 nor of any other link. Therefore, it is now possible also to use process 5.

Process 5 is distributed under consideration of the principle of uniform distribution of processes. The second level of network elements is processed already. Therefore it is possible to select an appropriate network element NE8 to NE10 of the third level. It is not recommendable to select network element NE8 or NE9 because that would result in a double overbooking of Link L1 that is used by network element NE6 (process 3) and network element NE4 (process 1') at the moment.

Therefore it is decided to select network element NE10 for process 5. This results in an overbooking of link L3 by one network element. Link L2 is not overbooked in this case because it has a very great transmission rate compared with the transmission rate of links L3, L5, L7 and L10.

The idea of the example of Figure 5 is to synchronize branches with slow transmission rates steadily at data rates that are higher than the estimated data rate to use delays and reaction times better. On the other hand, to much data should not be transmitted on these bottle necks to avoid overload that would slow down the transmission speed too strongly.

Figure 6 illustrates the selection of network elements based on calculated durations for data transmission. It is assumed again that there are more processes available in the TMN system 12 compared with the number of sub trees in control network 20. For reasons of simplifying it is assumed that the control network 20 has only two sub trees ST1b and ST2b now. It is assumed that there are 5 processes.

Sub tree ST1b comprises network elements NE1, NE4, NE6, NE8 and NE11. Sub tree ST2b comprises network elements NE2, NE3, NE5 and NE7. Furthermore, there are the following links in the control network 20 in addition to the links L1 to L5 described above with regard to Figure 2:
- link L6 between network element NE1 and NE6,
- link L8 between network element NE4 and NE8,
- link L11 between network element NE6 and NE11, and
- link L7 between network element NE3 and NE7.

The links L1 to L11 have the following transmission rates:
- link L1 1 Mbit/s (Megabit per second),
- link L2 1 Mbit/s,
- link L3 0.1 Mbit/s,
- link L4 1 Mbit/s,
- link L5 0.1 Mbit/s,
- link L6 0.5 Mbit/s,
- link L7 0.1 Mbit/s,
- link L8 1 Mbit/s, and
- link L11 0.5 Mbit/s.

It is assumed that there are the following amounts of data and the following estimated durations for uploading from the respective network elements:
- network element NE1 10 MByte, 80 s (seconds),
- network element NE2 1 MByte, 8 s,
- network element NE3 1 MByte, 80 s,
- network element NE4 10 MByte, 80 s,
- network element NE5 1.5 MByte, 120 s,
- network element NE6 10 MByte, 160 s,
- network element NE7 1 MByte, 80 s,
- network element NE8 10 MByte, 80 s, and
- network element NE11, 10 MByte, 160 s.

At time t30 process 1 is used for network element NE1 that is located at the first level in sub tree ST1b. Process 2 is used for uploading data of network element NE2, i.e. the highest level network element of sub tree ST2b. Then, also at time t30 process 3 is used for network element NE6, i.e. a network element in the next level of sub tree ST1b. Process 4 is used for network element NE3 in sub tree ST2b following the principle of uniform distribution of processes to sub trees.

The estimated durations for transmission are now considered for distributing process 5. For sub tree ST1b it is calculated by using a linear estimation that the transmission duration in sub tree ST1b will be approximately 80 seconds for network element NE1 plus 160 seconds for network element NE6, i.e. 240 seconds. Transmission delays and reaction times are not considered for these calculations in this example. For an alternative example more exact formulas are used to avoid linear estimation and/or to account for reaction times and transmission delays and for the different bandwidths of the different links on the route which is used for data transmission.

Next, it is calculated for sub tree ST2b that the overall transmission time for network element NE2 and network element NE3 will be 8 seconds plus 80 seconds, i.e. 88 seconds.

If process 5 would now be used for network element NE4 , then the estimated transmission duration for sub tree ST1b would be 240 second plus 80 seconds, i.e. 320 seconds. If process 5 would be used, however, for network element NE5, then the transmission duration for sub tree ST2b would be 88 seconds plus 120 seconds, i.e. only 208 seconds. Therefore process 5 is used for network element NE5 at time t30. Here it is not necessary to consider levels. It is sufficient to consider the link that is the bottleneck.

It is now assumed that the sub tree ST2b does not comprise network element NE5, see brackets 70, 72. In this case process 5 is used for network element NE7 because 168 seconds (88 seconds (NE2, NE3) plus 80 seconds (NE7)) is shorter than 320 seconds for sub tree ST1b.

These considerations are repeated each time a process 1 to 5 ends. After approximately 80 seconds processes 1 and 4 are finished and will be distributed again. The idea of the example of Figure 6 may result in an overbooking by more than one network element. The strategy is to have symmetrical execution times or run times in each sub tree ST1b and ST2b.

In the following there is a summary of the technical teachings mentioned above.

### Network concept

The embodiments relate to a concept for the efficient upload and synchronization of network element data in the TMN (Telecommunication Management Network) system. A TMN system allows the operator to configure end to end services, affecting several network elements at a time. NEs (Network Element) are connected to a TMN system via a DCN (Data Communication Network) in a transport network. The DCN transmits all requests from the TMN system to the NEs as well as all notifications and alarms which are sent from the NEs to the TMN system.

For some operational scenarios, e.g. when the NE data of lots of NEs have to be uploaded to the TMN system, a huge amount of data has to be requested from the network. The NE data may be data describing equipment which is installed physically in the network, e.g., card. Some examples for these scenarios are:
- initial start up of TMN system on an existing network,
- the synchronization of the TMN system after the TMN system was down, e.g. for migration/upgrade of the TMN system, or even after connection loss,
- when the TMN system has to upload bulk data from many NEs, e.g. performance measurement data (for instance, for 15 minutes and 24 hour intervals).

Figure 1 shows an example of a physical transport network. A service in the transport network relates to an entity that establishes a relationship between a customer and the network resources used by the customer. A service usually contains a reference to the customer, the network elements and links as well as a quality of service (QoS). Each service has one or several dedicated paths assigned.

Figure 2 shows an example of current active routes for a DCN in the physical transport network shown in Figure 1. A route is a sequence of NEs and links where the data traffic may flow. A link may be a physical trail, for instance a line or a radio frequency channel, that makes a connection between two adjacent NEs. Figure 2 shows different types of links and the DCN connections to the TMN system.

As shown in Figure 2, the DCN can use embedded DCC (Data Communication Channel), for instance DCCM (Data Communication Channel Multiplex Section) or DCCR (Data Communication Channel Regenerator Section, or separate equipment, e.g. Ethernet switches. These different types of DCN links can provide different bandwidths for the transmission of NE data.

Problem

It is required that the uploading of NE data (e.g. initial upload, upload for synchronization, upload of bulk data) is as fast as possible for the TMN system of transport networks. This requirement ensures the highest availability possible of the TMN system. 99.99 percent are for instance Required. In the case that the TMN system is asynchronous the user can only use it in a restricted way because the data available in the data base of the TMN system may be inconsistent. That means, the user may operate with data which describes physical entities that are not available in the network as expected.

Therefore, the upload is to be performed for different NEs in the TMN in parallel with regard to time or synchronously. The parallel upload may however have no positive effect due to the fact that the TMN system 12 does not have any knowledge about the DCN topology. The topology comprises for instance the routes in the DCN which are used to get the data from the network and/or the capacity of the different DCN links traversed. However, it seems to the TMN system 12 that each NE is directly connected to the TMN system 12 if the topology is not considered as shown in Figure 3.

In addition, the bottle neck for the uploads/synchronization of NE data is not in the TMN system 12 itself but in the transmission capacity of the DCN.

The problem to solve is to guarantee that the TMN system 12 performs a parallel upload of the NE data and uses the available DCN capacity in an optimized way. That means, the TMN system 12 may consider the DCN tree structure for the upload and synchronization of the NE data.

The problem is solved by a concept in the TMN system 12 which ensures an efficient use of the actual DCN capacity by considering the topology of the DCN for the parallel upload of the NE data of different NEs. This is a considerable improvement in the TMN system 12.

### Concept within the TMN system 12

The user can define a DCN tree by placing the NEs in the DCN tree using the TMN system 12. The placing is done according to the topology (i.e. routes) of the DCN 20. In addition the user can define:
- a load value for each NE, for instance the amount of data to be uploaded from an NE. This load value may also be verified by the TMN system 12 during the first upload and set if not defined yet. In the case that the user sets the load value wrong or that this values has changed, the TMN system may automatically correct the load value. The load value may not be fix for an NE but may depend on the current equipment of the NE.
- the bandwidth of the different DCN links which form the DCN topology.

Figure 5 shows an example of the DCN view, i.e. the view that is available in the TMN system 12. In the example the DCN 20 is viewed from the TMN system 12 in a tree structure, wherein the links L1 to L10 are the branches of the tree and the network elements NE are the leaves of the tree. Furthermore the bandwidths of the DCN links and the amount of data which has to be uploaded per NE may be known in the TMN system 12.

When the TMN system 12 needs to upload or to synchronize NE data of several or a lot of NEs, the TMN system 12 takes the stored DCN topology information, optionally the load factors and/or the DCN bandwidth into consideration and calculates which NEs can be uploaded in parallel and in which sequence. Thus it is ensured that the DCN capacity is used more efficiently. The time required for synchronization is reduced and the availability of the transport network 10 and of the TMN system 12 is increased.

The calculation of the NEs for data uploading in parallel and the sequence may be recalculated by the TMN system each time an uploading/synchronization of one NE is finished. Therefore, it is possible to consider also the current DCN characteristic.

### Concept enhancement

A possible enhancement of the drafted concept is that the TMN system 12 reads the DCN data (e.g. by requesting the routes), analyses the DCN data and automatically detects the topology of the DCN.

### Further example:

The DCN topology may be defined as shown in Figure 5, NE 1 to NE5. However, the following modifications are made:
- link L1 has a transmission rate of 100 MBit/s,
- link L2 has a transmission rate of 10 MBit/s,
- link L3 has a transmission rate of 0.58 MBit/s,
- link L4 has a transmission rate of 0.58 MBit/s, and
- link L5 has a transmission rate of 0.14 MBit/s.

Furthermore, there are the following amounts of data for uploading:
- network element NE1 and NE4 each 10 MByte,
- network elements NE2 and NE3 each 1 MByte, and
- network element NE5 1.5 MByte.

In this example, the TMN system 12 requests in parallel (time) the data from one NE in the upper branch ST1a, e.g. NE1, and from two NEs in the lower branch ST2a, e.g. NE2 and NE3 - due to the higher bandwidth available for these NEs and the amount of data to load/synchronize. The uploading/synchronization may be triggered by the user of the TMN system 12 or automatically by the TMN system 12 itself if the TMN system 12 detects that it is asynchronous to the transport network 10.

If the upload/synchronization of one NE is finished the TMN system 12 may immediately request the data from another NE of the same branch according to the parallelism and sequence calculated.

The consideration of the DCN topology for the parallel upload of NE data to the TMN system 12 has the advantage that it is now possible to utilize the available DCN capacity in an optimized way as well as to optionally consider additional factors, e.g. NE complexity and performance, for the upload and synchronization of NE data. This significantly reduces the time required for the upload and synchronization of the NE data. The availability of the TMN system 12 also increases and the user of the TMN system has to wait less time until upload and synchronization operations are finished. Thus, OPEX (Operational Expenditure) are reduced considerably. The concept may be implemented in stand alone TMN systems 12 or in embedded TMN systems, for instance in the TMN system TNMS of Nokia Siemens Networks GmbH & Co. KG. Alternatively, the concept can be implemented in TMN systems 12 of other suppliers of TMN systems 12. The TMN system 12 may be used to manage for instance at least one of the following types of transport networks, especially based on optical transmission technologies:
- WDM (Wavelength Division Multiplex), i.e. dense or coarse,
- SDH (Synchronous Digital Hierarchy) or SONET (Synchronous Optical NETwork),
- MSPP (Multi Service Provisioning Platform),
- SAN (Storage Area Network),
- IP (Internet Protocol), and
- Ethernet.

Although upload was primarily described, it is also possible to consider the topology for simultaneous downloads as well. Furthermore, the concepts described may be used for synchronous data transmission in transport networks.

### List of reference signs

1 to 5 process
1', 2', 4' process
10 transport network
12 TMN system
NE1 to NE11 network element
20 control network (DCN, Data Communication Network) LAN1, LAN2 local area network
DCCM1 multiplex section
DCCR1 regeneration section
EN1 Ethernet
30 view of control network in reference embodiment ST1 to ST5 sub tree
32 to 40 connection
L1 to L11 link
La to Lf link
t10 to t30 time
40 to 64 arrow
70, 72 brackets

## Claims

1. Method of determining network elements for synchronous data transmission, comprising:
providing a first network (20) that comprises a first network element (12),
considering the network topology of the first network (20) for determining at least two network elements (NE1, NE2) of the first network (20),
creating simultaneous connections between the first network element (12) and the determined network elements (NE1, NE2).

2. Method according to claim 1, wherein the first network (20) is used to manage a second network (10), and wherein the second network transmits user data.

3. Method according to claim 1 or 2, wherein the determining comprises:
selecting network elements (NE1, NE2) that are reachable via completely different routes from the first network element (12) or that can reach the first network element (12) via completely different routes.

4. Method according to claim 1 or 2, comprising:
systematical overbooking of a link (L1) via which at least two network elements (NE1, NE6) are reachable from the first network element (12) or via which the at least two network elements (NE1, NE6) can reach the first network element (12).

5. Method according to claim 4, wherein overbooking results in a shorter estimated duration of transmission for predetermined amounts of data to or from at least one or all of the selected network elements (NE1, NE6) compared with the case of serial synchronization of the network elements.

6. Method according to claim 4 or 5, comprising:
considering transmission rates of the links for the selecting.

7. Method according to one of the claims 4 to 6, wherein further overbooking of the same link is prevented after the first overbooking.

8. Method according to claim 1 or 2, comprising:
calculating durations for the transmission of predetermined amounts of data for at least two network elements in different parts of the first network (20), especially in different sub trees (ST1, ST2) with each of these sub trees beginning at the first network element (12),
selecting the element in that part for which the shortest duration was calculated.

9. Method according to claim 1 or 2, comprising:
using the topology to select network elements (NE1 to NE11) for simultaneous connections or to determine a sequence for simultaneous connections with the help of a method of optimization.

10. Method according to one of the preceding claims, comprising:
storing data that describes the topology of the first network (20),
using this data for the determining.

11. Method according to one of the preceding claims, wherein the first network (20) has a different topology compared with the second network (10).

12. Method according to one of the preceding claims, comprising:
storing values that give the amount of data that has to be transmitted for network elements (NE1 to NE11) of the first network (20).

13. Method according to one of the preceding claims, comprising:
recalculating the network elements (NE1 to NE11) for synchronous connections and/or the sequence for connections after a transmission or synchronization for one network element has been finished.

14. Method according to one of the preceding claims, wherein the topology is detected automatically from the transmitted data of the first network (20).

15. Method according to one of the preceding claims, comprising:
distributing processes that work in parallel in a uniform manner to different parts of the first network (20).

16. Method according to one of the preceding claims, comprising:
selecting of network elements (NE1, NE2) of a higher level in the topology before selecting network elements (NE3 to NE6) of a lower level.

17. Method according to one of the preceding claims, wherein an uploading of data is performed from network elements (NE1 to NE11) of the first network (20) to the first network element (12).

18. Method according to one of the preceding claims, wherein network elements (NE1 to NE11) of the first network (20) are control computers that control switching elements or routing elements of a second network (10) or of the second network (10).

19. Control element (12), comprising:
at least one processor (P),
at least one memory (M),
wherein the memory (M) stores program data for executing the following method:
considering the network topology of a first network (20) for determining at least two network elements (NE1, NE2) of the first network (20),
creating simultaneous connections between the first network element (12) and the determined network elements (NE1, NE2).

20. Control element (12) according to claim 19, wherein the memory (M) stores data describing the topology of the first network (20).

21. Control element (12) according to claim 19 or 20, wherein the memory (M) stores data for executing the method according to one of the claims 2 to 18.

22. Control network (20), comprising at least one control element (12) according to one of the claims 19 to 21.

23. Computer program product (M) comprising at least one computer readable storage medium (M) with computer readable program code stored therein,
the computer readable program code comprising:
a first executable portion for:
considering the network topology of a first network (20) for determining at least two network elements (NE1, NE2) of the first network (20),
creating simultaneous connections between the first network element (12) and the determined network elements (NE1, NE2).

24. Computer program product (M) according to claim 23, comprising at least a portion for executing a method according to one of the claims 2 to 18.
